# DEMANDE DE BREVET EUROPEEN

(11) **EP 1 492 061 A1**
(43) Date de publication de la demande: **29.12.2004**
(21) Numéro de dépôt: 03014209.5
(22) Date de dépôt: 25.06.2003
(51) Int. Cl.: G07F 7/10

(54) **Méthode d'allocation de ressources sécurisées dans un module de sécurité**

(71) Demandeur: Nagracard S.A., 1033 Cheseaux-sur-Lausanne (CH); Swisscom Mobile AG, 3050 Bern (CH)
(72) Inventeur: Ksontini, Rached, 10181 Lausanne (CH); Joly, Stéphane, 1098 Epesses (CH); Tazi, Mehdi, 1028 Préverenges (CH); Cantini, Renato, ch-1782 Belfaux (CH)
(74) Mandataire: Wenger, Joel-Théophile

(57) **Abrégé**

Le but de la présente invention est de proposer une méthode pour allouer des ressources sur un module de sécurité d'un appareil portable tel qu'un téléphone et qui tienne compte des impératifs de sécurité des différents intervenants tels que l'opérateur et les fournisseurs d'applications.

Ce but est atteint par une méthode d'allocation de ressources d'un module de sécurité d'un appareil connecté à un réseau, ce réseau étant administré par un opérateur, lesdites ressources étant utilisées par des fournisseurs d'application, cette méthode consistant dans les étapes suivantes :
- génération d'une paire de clés asymétriques et stockage de la clé privée dans le module de sécurité, la clé publique étant stockée chez l'opérateur,
- introduction d'au moins une clé publique de l'opérateur dans le module de sécurité,
- réception par l'opérateur d'une requête d'un fournisseur, cette requête comprenant au moins la clé publique du fournisseur,
- transmission par l'opérateur d'une instruction de réservation d'une ressource vers le module de sécurité accompagnée par la clé publique du fournisseur,
- transmission par l'opérateur de la clé publique du module de sécurité au fournisseur,
- établissement d'une communication sécurisée entre le fournisseur et le module de sécurité.

## Description

La présente invention concerne le domaine de la téléphonie sans-fil dite aussi téléphonie cellulaire. Elle concerne plus particulièrement des fonctions évoluées impliquant des mécanismes de sécurité ouverts à des fournisseurs spécifiques d'application.

Le module de sécurité d'un téléphone portable, plus connu sous l'appellation "carte SIM", est le coeur de la sécurité de ces téléphones. L'opérateur de téléphonie introduit à la fabrication ou lors d'une phase de personnalisation les informations nécessaires pour identifier d'une manière sûre tous les téléphones voulant se connecter sur son réseau.

A cet effet, il comprend au minimum un numéro unique et une clé cryptographique permettant d'identifier la carte SIM de manière sûre.

Si cette carte était uniquement dédiée au service de téléphonie initialement, de nouvelles applications ont vu le jour telles que l'affichage de cours boursiers ou des informations météo.

Pour parvenir à ce type d'application, le premier modèle a été de relier le fournisseur de ces données à l'opérateur qui les transmettait à destination des téléphones concernés.

Si cette solution convient bien pour des données généralistes telles que la météo, elle est inappropriée en ce qui concerne des données sensibles telles qu'un relevé bancaire.

Ainsi, ce type de service a buté sur un problème de confidentialité car il n'est pas acceptable que de telles données doivent transiter par l'opérateur de téléphonie mobile.

Une autre approche a été de donner aux fournisseurs les moyens cryptographiques (notamment les clés) pour accéder de façon sécurisée à la carte SIM. Cette approche a buté sur le problème inverse au précédent à savoir la transmission de secret de l'opérateur vers un fournisseur, ce qui n'est pas acceptable pour l'opérateur.

Ainsi, le but de la présente invention est de proposer une méthode qui tienne compte des impératifs de sécurité des différents intervenants et permette de proposer des applications sécurisées sur un téléphone portable.

Ce but est atteint par une méthode d'allocation de ressources d'un module de sécurité d'un appareil connecté à un réseau, ce réseau étant administré par un opérateur, lesdites ressources étant utilisées par des fournisseurs d'application, cette méthode consistant dans les étapes suivantes :
- génération d'une paire de clés asymétriques et stockage de la clé privée dans le module de sécurité, la clé publique étant stockée chez l'opérateur,
- introduction d'au moins une clé publique de l'opérateur dans le module de sécurité,
- réception par l'opérateur d'une requête d'un fournisseur, cette requête comprenant au moins la clé publique du fournisseur,
- transmission par l'opérateur d'une instruction de réservation d'une ressource vers le module de sécurité accompagnée par la clé publique du fournisseur,
- transmission par l'opérateur de la clé publique du module de sécurité au fournisseur,
- établissement d'une communication sécurisée entre le fournisseur et le module de sécurité.

Cette méthode présente l'avantage d'allouer des ressources d'une manière contrôlée du fait que la réservation, voire le blocage d'une ressource est sous le contrôle de l'opérateur alors que l'exploitation de cette ressource est sous le contrôle du fournisseur, sans que l'opérateur puisse avoir accès aux données échangées.

Une ressource est une zone mémoire d'un module de sécurité dont une partie est constituée par un programme et une autre partie est constituée par des données.

Le processeur du module de sécurité exécute le programme de la ressource d'une manière sécurisée c'est-à-dire que l'exécution ne peut faire appel à des plages de la zone mémoire hors de la zone de la ressource.

Grâce à cette ressource, un fournisseur peut par exemple stocker le numéro de compte bancaire et identifier le titulaire du compte.

Si l'opérateur souhaite résilier une ressource, il est le seul à pouvoir dialoguer avec le module de sécurité au niveau de la gestion des ressources. Le blocage d'une ressource provoque l'effacement de toute la zone mémoire dédiée à cette ressource et en particulier l'effacement de la clé publique du fournisseur. La zone des ressources comprend une partie de gestion dans laquelle va se trouver la définition de l'utilisation de chaque zone. Cette partie de gestion est gérée par l'opérateur. Elle contient l'identifiant du fournisseur, la clé de ce fournisseur et des informations permettant l'adressage de la zone mémoire. Cette partie pourra comprendre également des indications de dates si le fournisseur peut accéder la ressource durant un temps limité.

L'invention sera mieux comprise grâce à la description détaillée qui va suivre et qui se réfère aux dessins annexés qui sont donnés à titre d'exemple nullement limitatif, à savoir:
- la figure 1 illustre l'étape de personnalisation d'un module de sécurité,
- la figure 2 illustre la transmission entre un fournisseur et un opérateur,
- la figure 3 illustre les échanges de données entre les trois entités,
- la figure 4 illustre un module de sécurité à allocation de ressources.

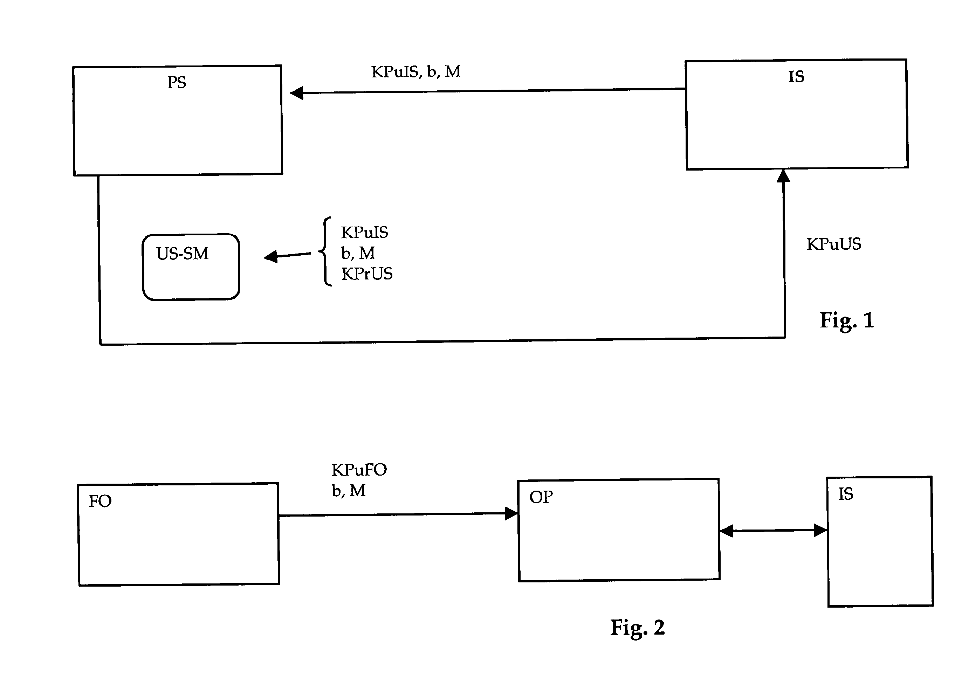

Selon la figure 1, l'initialisation d'un module de sécurité US-SM est effectuée par une entité PS telle qu'un fabricant de modules de sécurité. Cette entité PS place une clé publique KPuIS qui correspond à l'autorité en charge de la gestion de ces modules, ainsi qu'une clé privée KPrUS propre à ce module de sécurité.

Comme il sera décrit plus bas, d'autres paramètres de personnalisation tels que des données de génération d'une clé symétrique b, M peuvent également être stockés dans le module de sécurité.

L'entité de personnalisation PS renvoie à l'autorité IS les indications de personnalisation c'est-à-dire, pour un module donné (généralement identifié par son adresse unique), sa clé publique KPuUS. D'autres données telles que les caractéristiques du module, comme sa taille mémoire et ses modules cryptographiques sont également mémorisés par l'autorité.

La figure 2 illustre l'opération de requête par un fournisseur FO d'une ressource auprès de l'opérateur OP.

Afin de pourvoir accéder aux ressources d'un module de sécurité, un fournisseur FO va, dans une première phase, s'adresser à l'opérateur OP. Le fournisseur FO et l'opérateur OP vont alors se mettre d'accord sur les modalités de leur partenariat. Selon notre exemple, le fournisseur FO va requérir les informations nécessaires auprès de l'autorité IS; le fournisseur FO et l'autorité IS étant deux entités différentes. Dans un autre cas, il est possible que le fournisseur FO comprenne les fonctionnalités de l'autorité IS.

Le fournisseur FO va transmettre entre autres sa clé publique KPuFO à l'opérateur OP et l'informer des caractéristiques de la ressource nécessaire. Les données de génération d'une clé symétrique b, M peuvent également être transmises à ce moment.

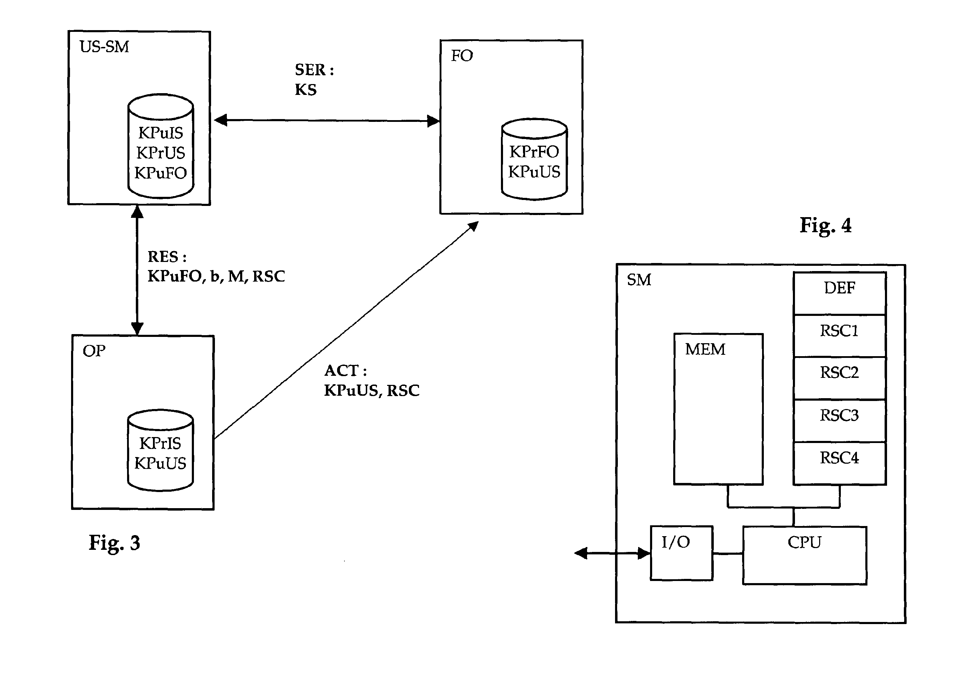

La figure 3 illustre trois opérations: SER, RES et ACT.

L'étape de réservation RES consiste à créer une ressource dans un module de sécurité. Un abonné, via son module de sécurité US-SM, peut émettre le souhait auprès de l'opérateur OP de profiter des services proposés par le fournisseur FO. Dans un tel cas, l'opérateur OP lui communique la clé publique KPuFO du fournisseur FO et parallèlement, va initier une opération de réservation de ressource RSC dans le module de sécurité. L'opérateur dispose d'informations concernant l'utilisation des ressources pour chaque module de sécurité. Il pourra déterminer, en fonction du type de besoin du fournisseur FO, la ressource la plus appropriée, par exemple selon la taille de l'espace mémoire demandé.

L'opérateur envoie une commande de réservation vers le module de sécurité, cette commande étant bien entendu sécurisée par la clé privée KPrOP de l'opérateur. Cette commande va réserver une ressource c'est-à-dire qu'une partie de la zone mémoire va recevoir des données propres à autoriser un dialogue avec un fournisseur. Lors de cette opération, le module de sécurité va recevoir la clé publique KPuFO du fournisseur, clé qui lui permettra d'établir une liaison sécurisée avec ce fournisseur. Selon le type de réalisation, les données de génération d'une clé symétrique b, M du fournisseur FO seront également transmises.

La seconde étape ACT consiste à communiquer les données d'un abonné ou module de sécurité au fournisseur FO. L'opérateur OP lui communique la clé publique KPuUS et l'identification de la ressource RSC qui lui a été attribuée.

Du fait que la clé publique de chaque module de sécurité est unique, signifie que l'opérateur OP ou l'autorité IS, une fois le module de sécurité US-SM identifié, va rechercher dans sa base de données la clé publique KPuUS propre à ce module pour la transmettre au fournisseur.

Cette initialisation faite, l'étape SER d'utilisation de ce service peut être activée et l'utilisateur pourra appeler un numéro spécialisé qui le mettra directement en liaison avec le fournisseur. Celui-ci aura pour première mission de charger son application dans le module de sécurité US-SM, dans la zone mémoire qui lui a été allouée par l'opérateur. Une clé de session KS est générée pour l'échange sécurisé des données.

La figure 4 illustre l'organisation du module de sécurité. Ce dernier est composé d'une unité de traitement CPU, d'une mémoire de travail MEM dans laquelle est stocké le programme d'exploitation du module et une zone de mémoire destinée aux ressources externes. Cette zone dispose d'une première partie dite de définition DEF qui contient les données définissant une ressource RSC1 à RSC4. Dans la pratique, la zone mémoire des ressources n'est pas nécessairement divisée à l'avance. Lorsqu'un fournisseur demande une ressource à l'opérateur, il peut spécifier également la taille de la mémoire nécessaire. Ainsi la zone mémoire des ressources pourra contenir d'autant plus de ressources différentes que chaque ressource utilise peu de mémoire. La partie de définition DEF contiendra les indications de début et de fin de chaque ressource.

Le module I/O schématise la communication avec l'appareil hôte tel qu'un téléphone portable.

Il existe plusieurs méthodes pour l'établissement d'une connexion sécurisée entre deux entités. Dans le cadre de l'invention, il est prévu d'utiliser une paire de clés asymétriques, l'entité principale disposant de la clé privée et l'entité tierce recevant la clé publique. La clé privée n'est en principe pas envoyée par des moyens de télécommunication mais directement introduite dans le dispositif lors d'une phase d'initialisation sécurisée. La clé publique est envoyée selon les scénarios décrits ci-dessus pour dialoguer avec ce dispositif.

En pratique, l'échange d'une clé publique se fait souvent à l'aide d'un certificat associé à cette clé. Lorsqu'une entité B reçoit la clé publique d'une entité A, cette clé est contenue dans un certificat qui est signé par une autorité à laquelle l'entité A fait confiance, par exemple par l'opérateur. Dans certains cas, il peut arriver que les entités A et B se soient déjà authentifiées au préalable et que le canal à travers lequel ils communiquent soit suffisamment sûr pour qu'ils puissent se transmettre une clé publique sans certificat.

Des clés asymétriques, telles que clés RSA, permettent une authentification des partenaires. Une entité A s'authentifie par une opération utilisant sa propre clé privée KPrA. Une entité B peut alors vérifier la validité de cette authentification à l'aide de la clé publique correspondante KPuA. Le cryptage basé sur des clés asymétriques est lourd et implique des moyens cryptographiques importants. C'est pourquoi les clés asymétriques sont utilisées généralement pour l'authentification et la génération d'une clé de session symétrique. Il est aussi possible d'utiliser les clés asymétriques pour l'authentification, et utiliser la méthode décrite par Diffie & Hellmann pour la génération d'une clé de session symétrique.

Selon un des modes de réalisation, l'étape de réservation d'une ressource comprend, en plus de l'envoi de la clé publique KPuFO du fournisseur, l'envoi des paramètres Diffie & Hellmann soit le module M et la base b propre à ce fournisseur. Ainsi, lors de l'établissement d'une clé de session entre le fournisseur et un module de sécurité d'un abonné, ces paramètres seront utilisés sans qu'il soit besoin de les transmettre à nouveau.

Il est possible d'utiliser également une clé de session générée par l'algorithme Diffie & Hellmann et pour cela, l'étape d'initialisation des modules de sécurité comprend une étape supplémentaire qui consiste à introduire les paramètres Diffie & Hellmann propre à l'opérateur dans les modules de sécurité.

Selon un premier mode de l'établissement d'une liaison sécurisée, l'échange des données entre les deux dispositifs utilisera la clé publique de l'autre dispositif. Cette manière de procéder a l'avantage que dans le même temps qu'une clé symétrique KS est générée permettant de sécuriser les échanges, l'authentification des partenaires est faite.

Selon un deuxième mode de l'établissement d'une liaison sécurisée, une clé de session est générée d'une manière classique entre les entités A et B sur la base des paramètres Diffie & Hellmann. Une fois cette clé de session établie, une procédure d'authentification mutuelle est initiée. Par exemple, l'entité A peut signer à l'aide de sa clé privée KPrA certaines des valeurs échangées avec B lors de la négociation Diffie & Hellman, et adresser à B la signature ainsi générée. L'entité B peut alors authentifier A en vérifiant la signature à l'aide de la clé KPuA. De manière similaire, l'entité B peut signer à l'aide sa clé privée KPrB certaines des valeurs échangées avec A lors de la négociation Diffie & Hellman, et adresser à A la signature ainsi générée. L'entité A peut alors authentifier B en vérifiant la signature à l'aide la clé KPuB.

Il existe aussi d'autres méthodes pour l'établissement de cette liaison sécurisée par exemple en inversant les deux étapes précédentes, c'est-à-dire d'utiliser la cryptographie à clé publique/privée pour authentifier les deux partenaires et ensuite générer la clé de session.

Dans la pratique, il se peut que diverses entités interviennent dans les différentes étapes. La génération des clés est confiée à une première autorité qui les communique, du moins la partie publique, à un intégrateur en vue de la personnalisation des modules de sécurité. Il est à noter que cette génération peut s'effectuer directement dans le module de sécurité et que seule la clé publique soit communiquée lors d'une phase d'initialisation, dans un environnement sécurisé.

Cette base de données des clés publiques associées au numéro unique (UA) de chaque module de sécurité peut, soit être gérée par l'opérateur, soit être déléguée à une entité tierce. C'est cette entité qui assurera les fonctions d'allocation de ressources en lieu et place de l'opérateur.

## Revendications

1. Méthode d'allocation de ressources d'un module de sécurité d'un appareil connecté à un réseau, ce réseau étant administré par une opérateur (OP), lesdites ressources (RSC) étant utilisées par des fournisseurs d'application (FO), cette méthode consistant dans les étapes suivantes :
- génération d'une paire de clés asymétriques et stockage de la clé privée dans le module de sécurité (US-SM), la clé publique (KPuUS) étant stockée chez une autorité (IS),
- introduction d'au moins une clé publique de l'autorité (KPuIS) dans le module de sécurité (US-SM),
- réception par l'opérateur (OP) d'une requête d'un fournisseur (FO) et transmission de cette requête à l'autorité (IS), cette requête comprenant au moins la clé publique du fournisseur (KPuFO),
- transmission par l'opérateur (OP) d'une instruction de réservation d'une ressource (RSC) vers le module de sécurité (US-SM) accompagnée par la clé publique du fournisseur (KPuFO),
- transmission par l'opérateur (OP) de la clé publique (KPuUS) du module de sécurité au fournisseur (FO),
- établissement d'une communication sécurisée entre le fournisseur (FO) et le module de sécurité (US-SM).

2. Méthode d'allocation de ressources selon la revendication 1, **caractérisé en ce que** la paire de clés asymétriques est générée par le module de sécurité, la clé publique étant alors transmise à l'autorité.

3. Méthode d'allocation de ressources selon la revendication 1, **caractérisé en ce que** des paramètres d'initialisation d'une clé de session (M, b) propre à l'opérateur sont stockés dans les modules de sécurité lors de l'initialisation.

4. Méthode d'allocation de ressources selon les revendications 1 à 3, **caractérisée en ce que** le fournisseur transmet des paramètres d'initialisation d'une clé de session (M, b) à l'opérateur, ces paramètres étant transmis au module de sécurité lors de la réservation d'une ressource.

5. Méthode d'allocation de ressources selon les revendications 1 à 4, **caractérisée en ce que** l'établissement d'une communication sécurisée entre le fournisseur et le module de sécurité est basé sur l'utilisation de la clé publique du fournisseur par le module de sécurité et par l'utilisation de la clé publique du module de sécurité par le fournisseur.

6. Méthode d'allocation de ressources selon la revendication 3, **caractérisée en ce que** l'établissement d'une communication sécurisée entre l'opérateur et le module de sécurité est basé sur la génération d'une clé de session utilisant les paramètres d'initialisation (M, b) de l'opérateur.

7. Méthode d'allocation de ressources selon la revendication 4, **caractérisée en ce que** l'établissement d'une communication sécurisée entre le fournisseur et le module de sécurité est basé sur la génération d'une clé de session utilisant les paramètres d'initialisation (M, b) du fournisseur.

8. Méthode d'allocation de ressources selon l'une des revendications précédentes, **caractérisée en ce que** l'autorité (IS) et l'opérateur (OP) forment une même entité.
